# EUROPEAN PATENT APPLICATION

(11) **EP 1 844 922 A1**
(43) Date of publication of application: **17.10.2007**
(21) Application number: 05701692.5
(22) Date of filing: 01.02.2005
(51) Int. Cl.: B29D 23/20, B65D 35/12

(54) **TUBE MADE FROM A FLEXIBLE MATERIAL WITH PRIOR INJECTION OF THE SKIRT AND HALF-HEAD AND IN-MOULD LABELLING AND PRODUCTION METHOD THEREOF**

(71) Applicant: Tuboplast Hispania, S.A., 01510 Minao Barren (ES)
(72) Inventor: FERNANDEZ DE MENDIOLA QUINTANA, Javier, E-01008 Vitoria Alava (ES)
(74) Representative: Urteaga Simarro, José Antonio
(86) International application number: PCT/ES2005/000039
(87) International publication number: WO 2006/082255

(57) **Abstract**

Procedure (25) for the manufacture of a tube (31) made of flexible materials provided with a skirt and head, in which a skirt-semihead unit (26) of the tube (31) is manufactured in a first in-mould injection process (9) that includes in-mould labelling, the head (20) of the tube (31) then being applied on the skirt-semihead unit (26) in a second process (29), preferably an over-moulding process and with the head (20) embedding the semihead (27). By means of this procedure (25) it is possible to avoid the use of printing machines as well as the use of alternative out-of-line decoration machines, thereby cutting manufacturing times and costs.

## Description

### Technical field

The invention relates to a tube made of flexible materials of the type used to contain cosmetics, creams, etc., and which principally consist of a skirt and a head and are provided with labels or other decorative elements. The invention also refers to its manufacturing procedure.

### Prior art

The aforementioned flexible tubes generally offer a shape that is principally defined by two parts: firstly, a skirt or tube body that is generally cylindrical and open on its top and bottom faces; secondly, a head or top cover, the function of which is to close one of the open faces of the skirt, and which includes a neck or projection through which the contents of the tube are extracted and to which the cap of the tube is connected.

Numerous methods of manufacturing tubes made of flexible materials formed by a head and a skirt are known. The majority of these methods comprise the following phases:
- manufacturing the tube, i.e. creating the skirt, the head and other parts that form the tube,
- decorating the tube, i.e. adding texts, drawings and/or other decorative motifs,
- capping the tube, i.e. connecting a cap to the head of the tube,
- packaging the capped tube, i.e. inserting one or more tubes in boxes or any kind of container for their transport.

The tube capping and packaging phases are generally performed on separate capping and packaging machines. As regards the manufacture and decoration of the tube, there are numerous known techniques, the most important of which are the following:
A) The manufacture of the tube part-by-part: the manufacture of the skirt by extrusion and the addition of the head by in-mould injection or any other appropriate system, followed by a decoration by printing.
B) The manufacture of the complete tube by in-mould injection, with decoration by in-mould labelling.
C) The manufacture of the complete tube by in-mould injection, with decoration by printing.
D) The manufacture of the tube part-by-part: manufacture of a skirt by in-mould injection, plus over-moulding of the head, together with decoration by in-mould labelling.

The first of these techniques, or technique A, is the one in which the skirt and head of the tube are manufactured separately, more specifically the skirt being made first of all by extrusion and the head then being added to the skirt by an over-moulding process. This technique offers some advantages over other techniques in which the complete tube, skirt and head are injected simultaneously and in a single mould. Among those advantages is the fact that the extrusion procedure and the extrusion machine that are involved in the manufacture of the skirt do not depend on the type of head to be added to the skirt at a later stage, but only on the required characteristics of the skirt. It is possible, therefore, to manufacture skirts for different heads using a single procedure and configuration profile of the extrusion machine. This technique allows for variations or alternatives, by virtue of which the head can be connected to the skirt by fusion bonding, injection-compression, or other systems apiece from over-moulding.

Common to all these alternatives is the fact that the printing, performed as it is by printing machines that print on a pre-formed product, presents drawbacks such as the high cost of printing machines, their slowness, their lack of quality and lack of versatility. Because of the lack of versatility of printing machines, when tubes are to be decorated with more complex decorations such as silk-screen printing, thermal printing, etc., these decorations must be applied to the tube on separate more appropriate machines. Moreover, these separate machines must also be positioned outside the assembly line due to the fact that these decorations are normally performed at a slower rate to that of the line, and to the fact that the integration of these operations in the line would make the process and its setting-up more complex.

In techniques B and C, the complete tube is manufactured in a single piece and by injection in a single mould. In this respect, patent US 6547094 B1, deriving from WO 9846409 A1, is known. This patent claims the manufacture by injection of flexible thin-wall articles, of the type formed in a single piece. These articles feature a built-in closure which is present, therefore, both in the mould and in the body of the article. This unitary manufacture of skirt and head presents some drawbacks as opposed to the separate manufacture disclosed in technique A, such as the following: the number of moulds increases enormously when pieces with different shapes are to be manufactured, as even a small variation in the head requires the replacement of the complete mould, and vice versa. Additionally, the manufactured tube is not at all versatile, in other words, it cannot be modified at a later stage into different shapes, etc.

Technique C presents the same drawbacks in terms of quality, decoration times and costs as technique A, as both techniques have in common that the decoration of the tube is performed during a printing process on a printing machine.

With a view to addressing the drawbacks of methods A, B and C, technique D has been created, claimed by the applicant itself in document PCT/ES2004/000034. This technique proposes the separate manufacture, by injection, of the tube skirt and the tube head, in conjunction with an in-mould labelling technique. In this way, the skirt or approximately cylindrical part is manufactured in a first in-mould injection plus in-mould labelling process, the head then being over-moulded in a second in-mould injection process. This technique, although satisfactory, presents certain aspects that can be improved upon during the first in-mould injection and in-mould labelling process. Firstly, when a skirt with an in-mould label that practically covers the entire height of the skirt is injected, the point of entry of the material in the mould is too close to the label, as a result of which the flow of material entering the mould may cause the label to lose colour or even move inside the mould. Secondly, it has been shown that the material enters the skirt mould with some difficulty due to the fact that the injection points are positioned on a wall as thin as the wall of the skirt.

It is an objective of the invention to disclose a tube made of flexible materials and a procedure for its manufacture that involves a considerable reduction of manufacturing costs and times. To achieve this, the aim is to reduce the number of machines involved in the procedure for manufacturing the tube, and to reduce the number of specialised personnel required. Furthermore, in relation to the previous, it is an additional object to eliminate all processes taking piece outside the continuous assembly line.

It is another objective of the invention to achieve a procedure in which a first part or component is obtained which is common to or shared with tubes of other shapes and sizes.

It is another objective of the invention to increase the quality of the decoration of the tube and thereby improve the appearance of the end product.

It is another objective of the invention to achieve a procedure for manufacturing the tube that reduces the risk of the labels or decorations losing colour or moving, and that manages to fill the mould cavity better and more quickly.

### Detailed description of the invention

In order to achieve the above objectives, the invention discloses a tube made of flexible materials which comprises a skirt and a semihead, made as a single part manufactured by in-mould injection with in-mould labelling, to which the closure device or head of the tube is connected by over-moulding or another method. The skirt is an approximately prismatic piece. The semihead is a partial closure on one of the ends of the skirt. The head is the part that partially or completely closes the prismatic skirt at one of its ends and may, optionally, allow the incorporation of a cap or other closure element.

The head is connected to the skirt and semihead preferably by over-moulding, although other embodiments are also contemplated such as a mechanical connection (thread, clip, etc.), adhesive connection, injection-compression, fusion bonding, etc.

In the case of a connection involving over-moulding, the head is preferably injected so that it embeds the semihead. To favour the embedding of the semihead, the semihead may be provided with variations in its surface, thickness or shape, that allow the injection material of which the head is made of to embed the semihead correctly during the over-moulding of the head on the semihead and the skirt.

In all cases, and particularly in the case of the head not being visible on the final tube (for example when the head is connected to a service cap or non-detachable cap), the injection of the head on the semihead can be performed with or without embedding the semihead.

The invention also defines a procedure for the manufacture of tubes made of flexible materials provided with a skirt and head, in the following manner:
- First of all, a semihead-skirt unit o part, comprising the skirt and a semihead of the tube, is manufactured in an injection mould. The final decoration of the tube is performed during this phase and at the same time as the injection itself by means of an in-mould labelling process. To achieve this, the skirt and semihead injection mould is supplied with the decorative elements or labels, which may include texts as well as drawings, silk-screen printing, thermal printing and other types of decorative motifs.
- The decorated skirt-semihead unit is then conveyed to an installation in which the head of the tube is connected to it, preferably by over-moulding.
- Finally, the decorated tube, consisting of the skirt, semihead and head, is capped and packed according to standard procedures.

In the first injection procedure, in which the skirt-semihead unit is manufactured, the mould may be provided with the technical capability of offering a variable effective length so that the length of the skirt may be varied and configured.

The inventive procedure meets the set objectives and offers multiple advantages over known techniques.

In relation to the techniques in which the skirt and the head of the tube are manufactured separately, both the manufacturing costs and times are reduced mainly because the extrusion, printing and alternative decoration (silk-screen printing) processes and machines used in said previous techniques are replaced by a single process and machine for injecting and decorating the skirt. The machinery reduction also leads to a lower necessity of specialised personnel and, therefore, to increased automation, reducing the risk of faults.

With regard to the techniques in which the decoration is performed by printing in a printing machine and which require alternative processes for other types of decoration, the invention allows applying the complete decoration of the tube in a single process. Additionally, this decoration is of considerably greater quality and versatility than that provided by printing machines, silk-screen printing machines, etc. due to the advanced nature of label-printing techniques in comparison to direct printing on tubes. In addition, taking into consideration that the materials used for tube manufacture are generally transparent, if opaque tubes are to be manufactured said opacity may be provided by the label or decorative elements applied during the moulding. As a result, it is not necessary to add colouring to the tube, important savings thus being made in colouring. Moreover, the effects of possible errors in the printing are reduced, as the printing is performed on labels instead of on the tube, and labels have a lower intrinsic value than tubes.

With regard to techniques in which the whole tube is manufactured by injection, the invention offers the advantage that at the end of a first phase of the manufacturing process headless skirt-semihead units are available, which may be subsequently used for heads of multiple shapes and sizes. This is not so in the previous techniques, in which the tube obtained in the injection mould is a single item and does not admit shape changes.

Finally, with regard to the technique for manufacturing the skirt by in-mould injection followed by over-moulding of the head, the invention embodiment in which the head is over-moulded on the semihead provides an improved visual transition between the skirt and the head of the tube specifically thanks to the semihead. In other words, in a tube according to invention there is no visible discontinuity between the skirt and the head, and because of this the tube offers a quality finish equal to that obtained by means of other manufacturing methods. Furthermore, given that the semihead may be hidden and embedded when the tube is completed, and that because of this it is possible to make the semihead with larger sections or thicknesses than that of the skirt itself, larger surfaces may be obtained upon which to over-mould the head than when the head is over-moulded directly on the skirt. In consequence, it is possible to improve the adherence or fusion bonding of said over-moulding.

### Description of the drawings

To illustrate the preceding description the following explanatory figures are provided:
- Figure 1 shows the procedure for manufacturing cylindrical tubes according to the prior art technique previously referred to as 'A'.
- Figure 2 shows the procedure for manufacturing tubes according to the prior art technique previously referred to as `B'.
- Figure 3 shows the procedure for manufacturing tubes according to the prior art technique previously referred to as 'C', or patent US 6547094 B1.
- Figure 4 shows the procedure for manufacturing tubes according to the prior art technique previously referred to as 'D'.
- Figure 5 shows the procedure according to the invention.
- Figure 6 shows an embodiment for a skirt-semihead unit according to the invention.
- Figure 7 shows an enlarged cross-sectional view of the skirt-semihead unit according to a cross-section through A-A of Figure 6.

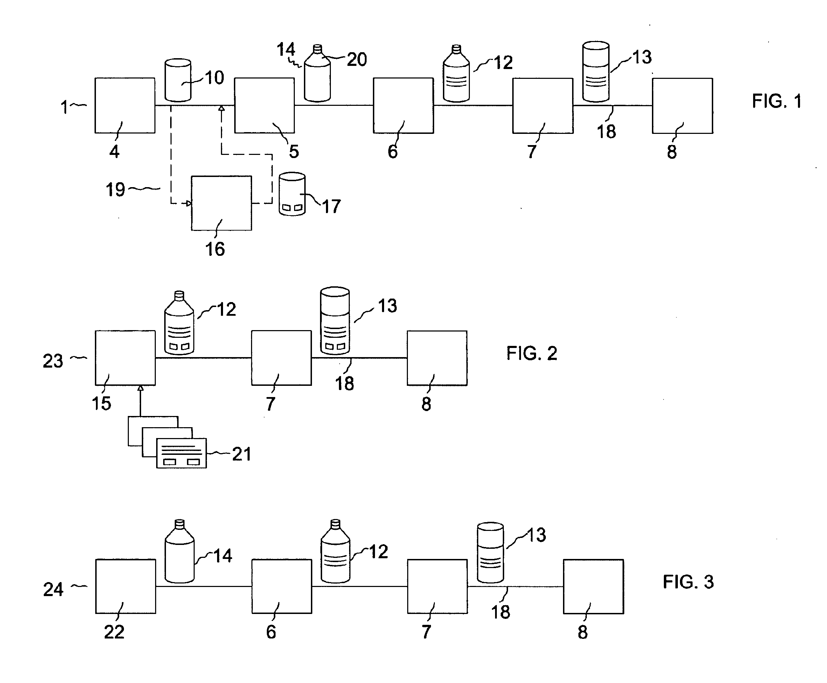

Figure 1 shows the prior art procedure (1) for the manufacture of cylindrical tubes, formed mainly by a continuous assembly line (18) and an external assembly phase (19) that is external to the line. The process commences on the continuous assembly line (18) with the manufacture of the tube body or skirt (10) in an extrusion machine (4), this skirt being a piece of flexible material open on its top and bottom faces. An injection machine (5) then injects the head (20) of the tube on the skirt (10), forming the complete tube (14). The printing machine (6) prints the texts, legends, drawings, etc., on the tube (14), forming the decorated complete tube (12). The capping machine (7) places the cap on the decorated complete tube (12), which is subsequently packed in the corresponding packing machine (8), thus completing the procedure.

In parallel, there are one or more machines that perform an alternative decoration (16) of the skirt (10): silk-screen printing machines, thermal printing machines, etc. These machines are outside the continuous assembly line (18) and can work on the skirt or tube in any state, this element being returned, once decorated with the alternative decoration, to the assembly line.

Figure 2 shows a tube manufacturing procedure (23) in which, in a first injection machine (15) provided with in-mould labelling, the decorated complete tube (12) is formed comprising both the skirt and the head. For the purpose of performing the in-mould labelling, the injection machine (15) is supplied with pre-printed decorative elements (21). The procedure ends with the capping (7) and packing (8) of the tube, as in the preceding procedures.

Figure 3 shows the procedure (24) for manufacturing tubes made of flexible materials according to patent US 6547094 B1, according to which the complete tube (14) is manufactured by injection (22) in a single part which comprises the skirt and the head. The decoration of the tube is performed on a subsequent printing machine (6), the decorated complete tube (12) being obtained at its exit. This tube (12), as in preceding procedures, is finally capped (7) and packed (8).

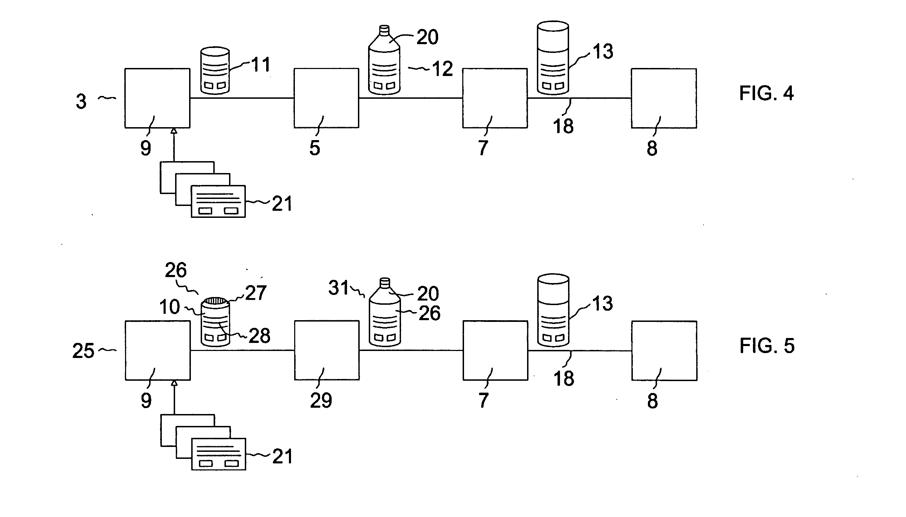

Figure 4 shows the procedure (3) for the manufacture of tubes made of flexible materials according to the aforementioned prior art invention in the name of the applicant. The process is performed by a single continuous assembly line (18) capable of manufacturing tubes made of flexible materials with standard decoration and alternative decoration (silk-screen printing, thermal printing, etc.). The assembly line (18) consists mainly of an injection machine (9) provided with in-mould labelling, for which said machine is supplied with decorative elements (21). The decorated skirt (11) is obtained from the injection machine (9). Subsequently, the printing (6) or alternative decoration (16) processes of Figure 1 not being necessary, the decorated skirt (11) is then directly subjected to the capping (7) and packing (8) phases.

Figure 5 shows the procedure (25) for manufacturing tubes according to the invention. In a first injection process (9) provided with in-mould labelling, the skirt-semihead unit (26) is formed, said skirt-semihead unit (26) comprising the skirt (10), the semihead (27) and the decorative element (28) applied during the moulding. For in-mould labelling purposes, the process (9) is supplied with external decorative elements (21). Afterwards, a head application process (29), which may involve an over-moulding process, adhering process, etc., forms or applies the head (20) onto the skirt-semihead unit (26), thereby forming the decorated complete tube (31). Said decorated complete tube (31) is then capped (7) and packed (8).

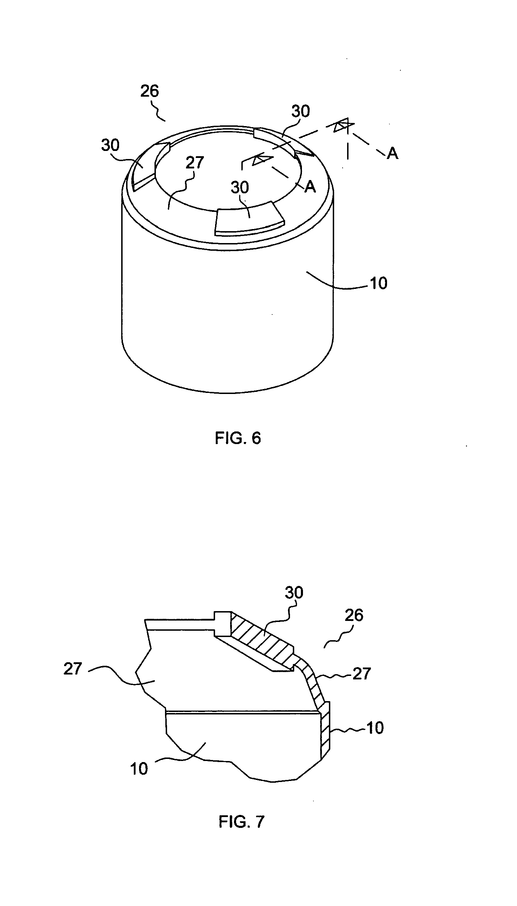

Figure 6 shows an embodiment of the inventive skirt-semihead unit (26). It can be seen that the skirt-semihead unit (26) is formed by a skirt (10) and a semihead (27). In the figure, the semihead (27) comprises variations (30) of thickness for the purpose of improving the result of a subsequent over-moulding process in which the head is formed on the skirt-semihead unit (26) and for the purpose of improving the result of the injection of the skirt-semihead unit (26) itself.

Figure 7 shows a sectional view, according to a cross-section through A-A, of the skirt-semihead unit (26) of the preceding figure. It can be seen how the variation (30) of the thickness of the semihead (27) increases the surface of the head (27), a surface upon which the head (27) is over-moulded, thereby improving the adherence achieved in said over-moulding process.

## Claims

1. Tube (31) made of flexible material, which comprises a skirt (10) or area with an approximate shape of a prism with a circular, elliptic or other cross-section, which is open at its opposite ends, and a head (20) or part that closes the skirt (10) partially or completely at one of its ends, said head (20) optionally comprising elements for the expulsion of the contents of the tube (31) and/or for the connection of caps or other elements, **characterised in that**:
- the tube (31) comprises a skirt-semihead unit (26), where the skirt-semihead unit (26) comprises the skirt (10) and a semihead (27), the semihead (26) being an element that partially closes one face of the skirt (10),
- the skirt-semihead unit (26) is formed in a single part by in-mould injection provided with in-mould labelling,
- the head (20) is connected to the skirt-semihead unit (26).

2. Tube (31) made of flexible material, in accordance with claim 1, wherein the head (20) is formed and connected to the skirt-semihead unit (26) by over-moulding.

3. Tube (31) made of flexible material, in accordance with claim 1, wherein the head (20) is connected to the skirt-semihead unit (26) by means of a mechanical union.

4. Tube (31) made of flexible material, in accordance with claim 1, wherein the head (20) is connected to the skirt-semihead unit (26) by means of an adhesive union.

5. Tube (31) made of flexible material, in accordance with claim 1, wherein the head (20) is connected to the skirt-semihead unit (26) by injection-compression.

6. Tube (31) made of flexible material, in accordance with claim 1, wherein the head (20) is connected to the skirt-semihead unit (26) by means of fusion bonding.

7. Tube (31) made of flexible material, in accordance with claim 2, wherein the head (20) is over-moulded so that the semihead (27) is not embedded in the interior of the head (20).

8. Tube (31) made of flexible material, in accordance with claim 2, wherein the head (20) is over-moulded so that the semihead (27) is embedded in the interior of the head (20).

9. Tube (31) made of flexible material, in accordance with claim 7 or 8, wherein the semihead (27) comprises variations (30) in its surface, thickness, shape or other fundamental characteristic.

10. Procedure (25) for the manufacture of tubes (31) made of flexible materials, where said tubes (31) comprise a skirt (10) or area with an approximate shape of a prism with a circular, elliptic or other cross-section, which is open at its opposite ends, and a head (20) or part that closes the skirt (10) partially or completely at one of its ends, said head (20) optionally comprising elements for the expulsion of the contents of the tube (31) and for the connection of caps or other elements, this procedure (25) being **characterised in that** it comprises the following phases:
- a first process (9) for the manufacture of a skirt-semihead unit (26) in an in-mould injection (9) process, the skirt-semihead unit (26) being a single piece that comprises the skirt (10) and a semihead (27), the semihead (26) being an element that partially closes one face of the skirt (10), the decoration of the tube being performed during said process (9) by means of an in-mould labelling process which uses pre-prepared decorative elements (21) that are supplied to the injection process (9),
- a second process (29) involving the formation and/or application of the head (20) of the tube (31) in the skirt-semihead unit (26).

11. Procedure (25) for the manufacture of tubes (31) made of flexible materials, in accordance with claim 10, wherein the process of injection (9) of the skirt-semihead unit (26) is performed by means of a mould with the technical capacity to offer a variable effective length so that the length of the skirt (10) of the skirt-semihead unit (26) can be varied and configured.

12. Procedure (25) for the manufacture of tubes (31) made of flexible materials, in accordance with claim 10, wherein the process (29) is an over-moulding process in which the head (20) is over-moulded on the skirt-semihead unit (26).

13. Procedure (25) for the manufacture of tubes (31) made of flexible materials, in accordance with claim 10, wherein the process (29) is a process of mechanical union in which a head (20) is mechanically connected to the skirt-semihead unit (26).

14. Procedure (25) for the manufacture of tubes (31) made of flexible materials, in accordance with claim 10, wherein the process (29) is an adhering process in which a head (20) is adhered to the skirt-semihead unit (26).

15. Procedure (25) for the manufacture of tubes (31) made of flexible materials, in accordance with claim 10, wherein the process (29) is an injection-compression process in which the head (20) is applied by injection-compression to the skirt-semihead unit (26).

16. Procedure (25) for the manufacture of tubes (31) made of flexible materials, in accordance with claim 10, wherein the process (29) is a fusion bonding process in which a head (20) is fusion bonded to the skirt-semihead unit (26).

17. Procedure (25) for the manufacture of tubes (31) made of flexible materials, in accordance with claim 12, wherein during the process (9) of over-moulding of the head (20) in the skirt-semihead unit (26), the head (20) is over-moulded without embedding the semihead (27).

18. Procedure (25) for the manufacture of tubes (31) made of flexible materials, in accordance with claim 12, wherein during the process (9) of over-moulding of the head (20) in the skirt-semihead unit (26), the head (20) is over-moulded embedding the semihead (27).
